# EUROPEAN PATENT SPECIFICATION

(11) **EP 2 188 321 B1**
(45) Date of publication and mention of the grant of the patent: **04.09.2013**
(21) Application number: 08853473.0
(22) Date of filing: 30.10.2008
(51) Int. Cl.: C08G 63/189

(54) **PROCESS FOR PREPARING POLYETHYLENENAPHTHALATE WITH 2,6-NAPHTHALENEDICARBOXYLIC ACID**
VERFAHREN ZUR HERSTELLUNG VON POLYETHYLENNAPHTHALAT MIT 2,6-NAPHTHALEN-DICARBOXYLSÄURE
PROCÉDÉ DE PRÉPARATION DE POLYÉTHYLÈNE NAPHTALATE AVEC DE L'ACIDE 2,6-NAPHTALÈNE-DICARBOXYLIQUE

(30) Priority: 30.11.2007 KR 20070123365
(43) Date of publication of application: 26.05.2010
(73) Proprietor: Hyosung Corporation, Seoul 121-720 (KR)
(72) Inventor: KIM, Hyun-Soo, Anyang-si Gyeonggi-do 431-080 (KR); CHOI, Young-Gyo, Anyang-si Gyeonggi-do 431-080 (KR); KIM, Woo-Sung, Anyang-si Gyeonggi-do 431-080 (KR); SONG, Byung-Jun, Anyang-si Gyeonggi-do 431-080 (KR)
(74) Representative: Katzameyer, Michael
(86) International application number: PCT/KR2008/006392
(87) International publication number: WO 2009/069895

(56) References cited:
- JP-B2- 3 720 858
- KR-B1- 100 326 660
- US-A- 3 496 220
- US-A- 5 331 082
- US-A- 5 811 513
- US-B1- 6 323 305

## Description

### Technical Field

The present invention relates to a process for preparing high-quality polyethylene naphthalate, in which the formation of side reaction products is minimized and reaction time is reduced by esterification of 2,6-naphthalene dicarboxylic acid (hereinafter referred to as "NDA") even at a low molar ratio of ethylene glycol (hereinafter referred to as "EG"). Further, the present invention provides a process performed at a low reaction temperature, thereby preventing deterioration of the products and improving the properties to obtain polyethylene naphthalate of high quality.

### Background Art

NDA is a monomer used to prepare PEN which is a starting material of multifunctional fiber or film and so on. PEN is particularly useful in films, fibers, insulators, magnetic tapes, bottles, etc. due to its excellent mechanical, thermal and chemical stabilities as compared to polyethylene terephthalate (hereinafter referred to as "PET"). Instead of a benzene ring of PET, PEN has naphthalene ring having a rigid structure. Thus, while having a structure very similar to PET, PEN has far superior mechanical properties such as glass transition temperature, heat resistance, tensile strength, creep resistance, etc., as compared to PET. PEN also has more than five times better gas-barrier property than PET, thus highly useful in high-strength thin films, barrier containers, heat-resistant containers, etc. Base on these advantages, PEN is industrially applicable in products that require high strength, high heat resistance and chemical resistance.

PEN is prepared with similar process equipment and techniques as PET. Further, PEN is likely to be widely used as an alternative to PET in various fields, but for all its importance, studies on the PEN-synthesis process using NDA and on its entire properties are basically insufficient.

NDA is insoluble with higher molecular weight than that of terephthalic add (hereinafter referred to as "TPA"). Thus, the molar ratio of EG/NDA should be at least twice as high as the molar ratio of EG/TPA(the molar ratio: 1.1∼1.2), and if the molar ratio is below the required level, it is impossible to be fed into an esterification reactor. As already known in the polymerization of PET, if EG is fed in an excessive amount, the molar ratio is increased such that the formation of side-reaction products is increased accordingly. Further, the increased reaction time leads to reduction in productivity, thereby deteriorating the properties of PEN and raising production costs.

The molar ratio of EG/NDA at the same level with that of EG/TPA is not enough to produce slurries, thus a study is required to solve the problem.

As a solution to overcome the shortcomings, U.S. Patent 5,331,082 discloses a method in which NDA is fed into an esterification reactor in a two-round process, and with a pressure set at 30psig and a temperature at 260°C, EG is fed therein for one hour. U.S. Patent 5,811,513 discloses a method of adding water to reduce the molar ratio of EG. Further, Korean Patent Publication No. 10-2001-0084527 discloses a method of adding monohydric alcohol to lower the molar ratio of EG.

The above methods with the use of water and alcohol enable esterification reaction by ameliorating the process of producing slurry of EG/NDA with a low molar ratio of EG. However, the use of water increases reaction time and deteriorates the properties because an excessive amount of water is used in the process. Further, in the case of using alcohol, the unit cost of a solvent used is higher than water, thereby it being economically disadvantageous.

Moreover, a method comprising a reaction under pressure, as disclosed in U.S. Patent 5,331,082, has disadvantages of using an increased amount of diethylene glycol(DEG), browning the polymers produced and of making it difficult to obtain homogeneous properties of polymers.

### Disclosure of Invention

### Technical Problem

Therefore, the object of the present invention is to provide a process for preparing PEN that solves the above-mentioned problems. According to the present invention, EG is fed within a desired temperature range into the esterification reactor in which 2,6-NDA and prepolymer are contained, thereby enabling polymerization with a low molar ratio of EG to prepare PEN.

Further, according to the method of the present invention, EG is fed in a preferred amount to minimize side reactions and reduce reaction time, and polycondensation reaction at a low temperature prevents deterioration of products to thereby prepare PEN of excellent quality.

### Technical Solution

In order to achieve above objects, the present invention discloses a method for preparing PEN by using 2,6-NDA and EG, comprising the steps of: performing esterification in which prepolymer and 2,6-NDA are contained in an esterification reactor and EG is fed thereinto at a molar ratio of 1.1∼1.5 based on the ratio of 2,6-NDA with the internal temperature of the reactor maintained at 240∼250°C and at atmospheric pressure, and the temperature of the upper portion of a distillation column is adjusted; and performing polycondensation reaction by adding a heat stabilizer and catalyst.

According to another preferred embodiment of the present invention, the temperature of the upper portion of the distillation column is preferably maintained at 95°C to 120°C and more preferably at 100°C to 105°C to improve ester reactivity and reduce reaction time.

According to another preferred embodiment of the present invention, prepolymer obtained from esterification is preferably polycondensed at a temperature of 270°C to 280°C, and more preferably at a temperature of 270°C to 275°C with the degree of vacuum adjusted to 0.5∼1.0torr.

According to another preferred embodiment of the present invention, phosphate-based heat stability and polycondensation catalyst are added during the polycondensation process.

### Advantageous Effects

The present invention for preparing PEN has advantages of enabling esterification even at a low molar ratio of EG, and improving reactivity with reduced reaction time. Further, the method includes a process of feeding reactant within a desired temperature range with the temperature of esterification reactor adjusted, thereby preventing a sharp decrease in the reaction temperature and improving reactivity reduced by an excessive feeding amount of NDA. In addition, the present invention is economically advantageous in that PEN of excellent quality can be prepared without adding water and alcohol and production costs can be reduced without additives for producing slurry.

### Brief Description of the Drawings

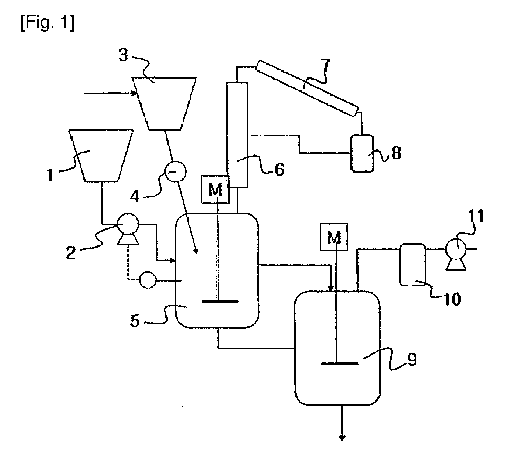

Fig. 1 is a schematic diagram illustrating the process for preparing polyethylene naphthalate according to the present invention.

### Mode for the Invention

Hereinafter, the present invention will be described in detail.

The present invention provides a process of feeding NDA at atmospheric pressure and room temperature, and a method of esterification and polycondensation including a process of feeding a certain amount of EG.

In the present invention, NDA is fed into an esterification reactor at room temperature and atmospheric pressure. Fig. 1 is a schematic embodiment of a process for preparing PEN of the present invention. The process of the present invention will be described in further detail with reference to Fig. 1.

Nitrogen is firstly fed into an NDA storage tank 3, and by nitrogen blowing, NDA is fed into an esterification reactor 5 in a certain amount measured by estimate flow meter.

With the temperature inside the reactor maintained at 240∼250°C, EG is fed into the reactor 5 in a proper amount by using EG transfer pump 2. Under the feeding condition, the molar ratio of EG to NDA is 1.1∼1.5 and the internal temperature of the esterification reactor is maintained at 240∼ 250°C, with no catalyst applied. Preferably, the molar ratio of EG to NDA is 1.2∼1.3, with the internal temperature of the reactor maintained at 244∼248°C.

The temperature of the upper portion of a distillation column 6 is adjusted at 95∼120°C during the esterification reaction of EG and NDA which are fed into the reactor containing prepolymer. Preferably, the temperature is maintained at 100∼105°C for improving ester reactivity and reducing the reaction time. The vapor generated in the esterification reactor 5 is passed through the upper portion of the distillation column 6 and condensed through a cooling tube 7 to be stored in a discharged water storage tank 8, or transferred into the distillation column 6 in order to control the temperature of the upper portion of the distillation column.

The prepolymer obtained from the esterification reaction is preferably polycondensed at a reaction temperature of 270∼300°C in the polycondensation reactor 9. The reaction temperature during the polycondensation is set at 265°C in the early stage of vacuum process and after 20 minutes set at 270°C, and after 30 minutes at 275°C to control the final reaction temperature preferably in the range of 275°C to 280°C. The degree of vacuum of the polycondensation reactor 9 is slowly reduced to be 1.0∼0.5torr by using a vacuum pump 11.

EG generated in the polycondensation reactor and unreacted EG are liquefied during a vacuum process in a cooling trap unit 10, stored therein, and discharged after the reaction.

Heat stabilizer and polycondensation catalyst are added in the polycondensation reactor 9 during the process of polycondensation of prepolymer. Phosphate-based stabilizer may preferably be used as heat stabilizer, but the type to be used is not particularly limited. The added amount is preferably in the range of 100ppm to 300ppm, and more preferably in the range of 150ppm to 200ppm.

Polycondensation catalyst may be one compound selected from a group of metal compounds containing Antimony(Sb), Lithium(Ti), Titanium(Ti), Zinc(Zn), Plumbum(Pb), Manganese(Mn), Calcium(Ca). A compound comprising inexpensive antimony(Sb) is generally used, preferably in the range of 150ppm to 300ppm, and more preferably in the range of 200ppm to 250ppm.

Hereinafter, the present invention will be described in further detail with reference to Examples. The Examples are for illustrative purposes and it should not be construed that the scope of the invention is limited thereto.

<Example 1>

The temperature for controlling reaction of the esterification reactor 5 is set at 245°C. Then NDA and EG are fed in a certain amount from the NDA storage tank 3 and EG storage tank I into the esterification reactor 5 containing 10kg of prepolymer With the temperature inside the esterification reactor 5 down from 245°C to 244°C, the NDA storage tank 3 stops feeding into the esterification reactor 5, and the EG storage tank 1 starts feeding thereinto. The feeding process is continued until the temperature inside the esterification reactor 5 reaches 242°C, and when the temperature falls below the level, the process stops. The above process is repeated until the temperature inside the esterification reactor 5 is maintained at 245°C. In the process, EG and NDA are fed with a molar ratio of 1.2:1. The reaction is terminated 30 minutes after the process of feeding EG is finished when the temperature of the bottom portion of the distillation column 6 drops from 194∼197°C to 180°C or less, and when water in the discharged water storage tank 8 is discharged at a rate of less than 5ml/30min. The reaction is carried out for four and a half hours with the esterification reaction rate of 98% or more. A half of the products produced are transferred into the polycondensation reactor 9, and 200ppm of trimethylphosphate as heat stabilizer and 200ppm of antimony trioxide as polycondensation catalyst are added with an agitation rate set at 60ppm. The degree of vacuum is gradually increased for 25 minutes to reach 0.8Torr, and the temperature of the inside of the polycondensation reactor is adjusted to 280°C to perform the polycondensation reaction. The reaction is carried out for about one and a half hours to obtain a polymer having intrinsic viscosity of 0.5dl/g. The results are shown in Table 1.

<Examples 2-6>

The process is carried out in the same manner as in Example 1, except that EG and NDA are fed with a molar ratio of 1:1, 1.1:1, 1.3:1, 1.5:1 and 2.0:1 respectively. The results are shown in Table 1.

Table 1

**[Table 1]**

| | Item | Example 1 | Example 2 | Example 3 | Example 4 | Example 5 | Example 6 |
|---|---|---|---|---|---|---|---|
| Esterification | Reaction time | 4.5 hours | 4 hours and 10 min. | 4 hours and 10 min. | 4 hours and 45 min. | 4 hours and 40 min. | 5 hours and 20 min. |
| | Reaction rate (%) | 98.0 | 85.6 | 94.2 | 98.0 | 98.2 | 98.8 |
| | Content of DEG (wt%) | 0.78 | 0.72 | 0.77 | 0.81 | 0.92 | 1.15 |
| | Content of Free EG (wt%) | 1.40 | 1.26 | 1.42 | 1.61 | 1.77 | 2.50 |
| Polycondensation | Reaction time | 1.5 hours | 1 hour | 1 hour | 1.5 hours | 1 hour and 40 min. | 1 hour and 40 min. |
| | Content of DEG (wt%) | 0.88 | 1.12 | 1.10 | 0.94 | 1.07 | 1.38 |
| | ΔDEG (wt %) | 0.1 | 0.4 | 0.33 | 0.13 | 0.3 | 0.23 |
| | Tg (°C) | 123.7 | 120.5 | 121.6 | 122.5 | 121.7 | 120.8 |
| | Tm (°C) | 265.7 | 263.2 | 263.5 | 265.8 | 264.0 | 262.7 |
| | Content of CEG(meq/ kg) | 14.4 | 18.0 | 17.0 | 12.6 | 12.1 | 14.4 |
| Chromati city of polymers | b* | 4.0 | 4.2 | 3.8 | 4.5 | 4.4 | 5.1 |
| | L* | 81.2 | 83.9 | 81.2 | 80.5 | 81.3 | 78.9 |

b*: Lightness

L*: Yellow chromaticity

<Examples 7∼12>

The process is carried out in the same manner as in Example 1, except that the temperature inside the polycondensation reactor is adjusted to 270°C, 275°C, 285°C, 290°C, 295°C and 300°C, respectively. The results are shown in Table 2.

Table 2

**[Table 2]**

| | Item | Example 7 | Example 8 | Example 9 | Example 10 | Example 11 | Example 12 |
|---|---|---|---|---|---|---|---|
| Polycondensation | Reaction time | 2.5 hours | 1.5 hours | 1.5 hours | 1.5 hours | 1 hour and 20 min. | 1 hour and 20 min. |
| | Content of DEG (wt%) | 1.10 | 0.90 | 0.98 | 1.10 | 1.28 | 1.40 |
| | Tg (°C) | 120.6 | 122.9 | 122.6 | 121.0 | 120.2 | 119.7 |
| | Tm (°C) | 262.9 | 265.5 | 264.1 | 263.9 | 262.5 | 261.9 |
| | Content of CEG (meq/ kg) | 16.6 | 16.1 | 10.4 | 8.1 | 7.2 | 9.0 |
| | Chromaticity b* | 4.69 | 4.80 | 6.64 | 10.32 | 12.75 | 14.53 |
| | Chromaticity L* | 44.60 | 42.50 | 47.66 | 47.66 | 38.54 | 35.37 |

b*: Lightness

L*: Yellow chromaticity

<Comparative Examples 1 and 2>

To show superiority of the present invention over prior arts, PEN is prepared according to the method of U.S. Patent No. 5,811,513 by adding water to make slurry. The process is carried out in the same manner as in Example 1, except that water is added to EG with a molar ratio of 1:1 and 0.8:1 to produce slurry. The reaction results are shown in Table 3.

<Comparative Example 3>

To show superiority of the present invention over prior arts, PEN is prepared according to the method of U.S. Patent No. 5,331,082. The process is carried out with the same molar ratio of EG/NDA as in Example 1. 10 kg of NDA is fed into 10 kg of prepolymer in a two-round process with a pressure at 30 Psig and a temperature at 260°C. Then EG is fed for 1 hour to perform a reaction until the temperature of the upper portion of the distillation column drops by more than 2.2°C. With the reaction pressure reduced to atmospheric level, the reaction is terminated. After transferring the resulting material into the polycondensation reactor, 80ppm of polyphosphoric acid and 167ppm of antimony trioxide are fed thereinto to perform a reaction with the degree of vacuum at 0.5torr and the temperature of polycondensation reaction rising up to 288°C. The reaction results are shown in Table 3.

Table 3

**[Table 3]**

| | Item | Example 1 | Comparative Example 1 | Comparative Example 2 | Comparative Example 3 |
|---|---|---|---|---|---|
| Esterification | Reaction time | 4.5 hours | 5 hours and 50 minutes | 5.5 hours | 4 hours and 50 minutes |
| | Reaction rate (%) | 98.0 | 94.2 | 95.6 | 96.6 |
| | Content of DEG (wt%) | 0.78 | 0.99 | 0.93 | 1.01 |
| | Content of Free EG (wt%) | 1.40 | 1.26 | 1.42 | 1.61 |
| Polycondensation | Reaction time | 1.5 hours | 1.5 hours | 1.5 hours | 1 hour and 50 min. |
| | Content of DEG (wt%) | 0.88 | 1.31 | 1.20 | 1.24 |
| | ΔDEG (wt %) | 0.1 | 0.32 | 0.27 | 0.23 |
| | Tg (°C) | 123.7 | 120.1 | 120.3 | 121.1 |
| | Tm (°C) | 265.7 | 261.3 | 261.9 | 261.4 |
| | Content of CEG(meq/ kg) | 14.4 | 23.1 | 21.0 | 27.0 |
| Chromaticity of polymers | b* | 4.0 | 4.5 | 4.1 | 9.3 |
| | L* | 81.2 | 82.3 | 81.8 | 77.2 |

b*: Lightness

L*: Yellow chromaticity

## Claims

1. A method for preparing polyethylene naphthalate using 2,6-naphthalene dicarboxylic acid and ethylene glycol, comprising the steps of: performing esterification wherein prepolymer and 2,6-naphthalene dicaboxylic are contained in an esterification reactor, and ethylene glycol is fed thereinto at a molar ratio of 1.1∼1.5 based on the ratio of 2,6-naphthalene dicaboxylic acid with the internal temperature of the reactor maintained at 240∼250°C and at atmospheric pressure, and the temperature of the upper portion of a distillation column is adjusted and performing polycondensation reaction by adding a heat stabilizer and catalyst.

2. The method for preparing polyethylene naphthalate according to claim 1,
wherein the temperature of the upper portion of the distillation column is maintained at 95°C to 120°C.

3. The method for preparing polyethylene naphthalate according to claim 1,
wherein the polycondensation reaction is performed at a temperature of 270°C to 300°C with the degree of vacuum adjusted to 0.5∼1.0torr.

4. The method for preparing polyethylene naphthalate according to claim 1,
wherein the heat stabilizer is phosphate-based heat stabilizer.

5. The method for preparing polyethylene naphthalate according to claim 1,
wherein the polycondensation catalyst may be one compound selected from a group of metal compounds containing Antimony(Sb), Lithium(Li), Titanium(Ti), Zinc(Zn), Plumbum(Pb), Manganese(Mn) and Calcium(Ca).

## Patentansprüche

1. Verfahren zur Herstellung von Polyethylennaphthalat unter Verwendung von 2,6-Naphthalindicarbonsäure und Ethylenglycol, umfassend die Schritte:
Durchführung einer Veresterung, wobei Prepolymer und 2,6-Naphthalindicarbonsäure in einem Veresterungsreaktor enthalten sind und Ethylenglycol in einem Molverhältnis von 1,1-1,5, bezogen auf den Anteil von 2,6-Naphthalindicarbonsäure, diesem zugeführt wird, wobei die Innentemperatur des Reaktors bei 240-250°C gehalten wird und der Reaktor bei Atmosphärendruck, und die Temperatur des oberen Teils einer Destillationssäule eingestellt wird und eine Polykondensationsreaktion mittels Zugabe eines Wärmestabilisators und eines Katalysators durchgeführt wird.

2. Verfahren zur Herstellung von Polyethylennaphthalat nach Anspruch 1, wobei die Temperatur des oberen Teils der Destillationssäule bei 95°C bis 120°C gehalten wird.

3. Verfahren zur Herstellung von Polyethylennaphthalat nach Anspruch 1, wobei die Polykondensationsreaktion bei einer Temperatur von 270°C bis 300°C durchgeführt und der Vakuumgrad auf 0,5-1,0 Torr eingestellt wird.

4. Verfahren zur Herstellung von Polyethylennaphthalat nach Anspruch 1, wobei der Wärmestabilisator ein Wärmestabilisator auf Phosphatbasis ist.

5. Verfahren zur Herstellung von Polyethylennaphthalat nach Anspruch 1, wobei der Polykondensationskatalysator eine einzige Verbindung sein kann, die aus einer Gruppe von Metallverbindungen, umfassend Antimon (Sb), Lithium (Li), Titan (Ti), Zink (Zn), Blei (Pb), Mangan (Mn) und Calcium (Ca), ausgewählt ist.

## Revendications

1. Procédé de préparation de polyéthylène naphtalate avec de l'acide 2,6-naphtalènedicarboxylique et de l'éthylène glycol, comprenant les étapes suivantes : la réalisation d'une estérification où un prépolymère et de l'acide 2,6-naphtalènedicarboxylique sont contenus dans un réacteur d'estérification, et de l'éthylène glycol est chargé à l'intérieur à un rapport molaire de 1,1 ∼ 1,5 sur la base du rapport de l'acide 2,6-naphtalènedicarboxylique, avec la température interne du réacteur maintenue à 240 ∼ 250°C et à la pression atmosphérique, et la température de la partie supérieure d'une colonne de distillation est ajustée et la réalisation d'une réaction de polycondensation grâce à l'ajout d'un stabilisant thermique et d'un catalyseur.

2. Procédé de préparation de polyéthylène naphtalate selon la revendication 1, dans lequel la température de la partie supérieure de la colonne de distillation est maintenue de 95°C à 120°C.

3. Procédé de préparation de polyéthylène naphtalate selon la revendication 1, dans lequel la réaction de polycondensation est réalisée à une température de 270°C à 300°C avec le degré de vide ajusté à 0,5 ∼ 1,0 torr.

4. Procédé de préparation de polyéthylène naphtalate selon la revendication 1, dans lequel le stabilisant thermique est un stabilisant thermique à base de phosphate.

5. Procédé de préparation de polyéthylène naphtalate selon la revendication 1, dans lequel le catalyseur de polycondensation peut être un composé choisi dans un groupe de composés métalliques contenant antimoine (Sb), lithium (Li), titane (Ti), zinc (Zn), plomb (Pb), manganèse (Mn) et calcium (Ca).
